Europäisches Patentamt

European Patent Office

Office européen des brevets

(11) Publication number: **0 173 081**
A1

## (12) EUROPEAN PATENT APPLICATION

(21) Application number: 85109369.0

(22) Date of filing: 25.07.85

(51) Int. Cl.⁴: **G 01 N 27/26**

(30) Priority: 02.08.84 CA 460243

(43) Date of publication of application: 05.03.86
Bulletin 86/10

(84) Designated Contracting States: **AT BE CH DE FR GB IT LI LU NL SE**

(71) Applicant: **INSTITUT ARMAND-FRAPPIER,
531 Boulevard des Prairies, Laval Quebec H7N 4Z3 (CA)**

(72) Inventor: **Hamelin, Claude, 4630 Lacombe, Montreal
Quebec (CA)**

(74) Representative: **Patentanwälte Ruff und Beier,
Neckarstrasse 50, D-7000 Stuttgart 1 (DE)**

(54) **Electrophoresis system in series for multiple agarose slab gels.**

(57) The disclosure describes an apparatus for the electrophoresis in series of multiple agarose slab gels. It comprises a train of at least three elongated box-like containers (1, 2, ... 12) such as twelve, which are set consecutively in substantially parallel fashion at a variable distance from one another, each container to contain a running buffer (21, 22, 23, 24). The first and last containers (1, 12) are each provided with an electrode (17, 19) for connection to a single suitable power supply. A plurality of horizontal plates (31, 33), each to contain a slab gel (35), are disposed in bridging fashion over adjacent spaced apart containers, to cover gaps between all the containers (1, 2, ... 12). The apparatus comprises first means (39) capable of establishing capillary contact between one end of the slab gel (35) and the running buffer which is present in a given container; and second means (39) capable of establishing capillary contact between the other end of the slab gel (35) and the running buffer which is present in the next container. A method for the separation of components from a mixture of molecules of mixed molecular weights, wherein a solution of said molecules is added to wells (37) formed in a horizontal slab gel (35) and the gel is thereafter treated by the above electrophoresis to produce localized bands each being characteristic of a specific molecular weight, is also disclosed.

1

BACKGROUND OF INVENTION

(a) Field of the Invention

This invention relates to an electrophoresis system for multiple agarose slab gels in series and to a method for the separation of components from a mixture of molecules of mixed molecular weights, in particular for the separation of multiple DNA samples.

(b) Description of Prior Art

The high sensitivity and resolving power of agarose gel electrophoresis combined with the simplicity of known methods for the preparation of bacterial plasmids provide an efficient means in recombinant DNA research for the isolation of specific genes and for the creation of gene libraries from different organisms. Plasmids carrying desired DNA fragments can effectively be identified even in the absence of suitable genetic markers or specific hybridization probes, on the basis of a close relationship between the size of the intact molecules and their electrophoretic mobility in agarose. This convenient procedure is, however, seldom used in large cloning experiments mainly because of the limited capacity of most of the custom-made or commercially-available electrophoresis systems. A researcher with two electrophoresis apparatuses and a single (generally expensive) power supply may take several days or weeks only to find a unique recombinant plasmid (among many hundreds) that will complete its collection.

The main problem which faces the researcher as well as the industry is therefore the lack of an apparatus which could be used to carry out simultaneously a large number of tests with agarose slab gels of various sizes.

Most of the commercially available apparatuses are expensive and since at the most only two commercially available electrophoresis systems can be used simultaneously with the same power supply unit, an operation which involves a large number of tests, i.e. many agarose slab gels, necessarily means an investment which is generally unacceptable. This is especially true, because power supply units and platinum electrodes which are normally used with this type of apparatus are very expensive. For example, let us suppose that it is intended to provide a system which is capable of achieving the simultaneous testing of twelve (12) gels. In such a case, there would be needed twelve (12) such commercial apparatuses which are each designed to operate with one single slab gel, and six (6) power supply units, since each unit is capable of being connected to two electrophoresis apparatuses.

There is therefore a need for a system which can include a large number of agarose slab gels and in which the investment outlay is as small as possible, while at the same time providing an arrangement which is easy to operate and reliable.

A rough evaluation of such a system would indicate that each apparatus including two platinum electrodes at today's cost would amount to about $500-$600. In addition each power unit costs about $3000. Therefore, to provide a system which is operational with twelve (12) slab gels, the total cost would run to approximately $10,000. In addition, it will easily be realised that a system including the above parts would be too cumbersome to be interesting.

A review of the prior art indicates that electrophoresis systems are well known. In this connection, the following U.S. Patents should be noted:

| | | |
|---|---|---|
| 3,578,604 | May 11, 1971 | Uriel |
| 4,059,501 | November 22, 1977 | Strickler |
| 4,151,065 | April 24, 1979 | Kaplan |
| 4,198,389 | April 15, 1980 | Wadsworth |
| 4,391,688 | July 15, 1983 | Hamelin |
| 4,416,761 | November 22, 1983 | Brown et al |

In an effort to provide a system which is more operational and adequate than one which results from a combination of a plurality of prior art apparatuses associated with a plurality of power supply units, I have designed a low cost agarose slab gel electrophoresis apparatus which allows the separation of multiple DNA samples on four different gel slabs using a single outlet of a power supply unit. In U.S. Patent No. 4,391,688, I proposed slab superposition as a solution to unpleasant shortages of electrophoresis units and/or power supplies which needlessly prevent or delay the completion of other experiments in the laboratory. In normal operation, it can be used to test at least four (4) slab gels of variable sizes while being connected to one single power supply unit. Of course, since there are two outlets for each power supply unit, a second apparatus of the same type can be connected to the same power supply unit.

The apparatus of my U.S. Patent 4,391,688 can therefore provide an increase of the number of gels over the commercial apparatuses, while ensuring an analysis which is easy and rapid and with large resolution. In addition, there is no risk of contamination of the large molecules of DNA with small RNA or DNA molecules as could be the case with Kaplan U.S. 4,151,065 as will be discussed later. However, my apparatus has certain disadvantages.  For example, because the operator has to pile the various slab gels to be tested, the handling of a plurality of slab gels at the same time is quite complicated.  Also, because this system is based on the stacking of slab gels, it is hardly possible to have more than two stacks of slab gels, the reason  being that the handling is difficult and if three stacks would be considered this would be mostly impractical mainly because of the number of plies of wick that would be required.

The system described in my U.S. 4,391,688 is therefore limited to two stacks of slab gels under normal operation.  Therefore, at the most, when connecting two apparatuses to one power supply unit, the test would be limited to eight (8) slab gels.

The system of Uriel, described in U.S. Patent No. 3,578,604 on the other hand is designed to contain one single slab gel which may perhaps hold a plurality of samples.  The system is not adapted to carry out the electrophoresis with different type gels.  The Uriel apparatus is somewhat the equivalent of the first stack of my U.S. 4,391,688, with the proviso that the two vessels holding the liquid would be set at a  specific distance which could not vary.  It would therefore be impossible to use it with slab gels of various sizes.  On the other hand, the support which is used to hold the gel is very complex and the connection with the liquid is achieved with the gel per se. In any case, Uriel is mainly concerned with the preparation of a particular type of medium to effect the separation, said medium including acrylamide, which would of course prevent the separation of molecules of the type plasmid recombinant.

U.S. 4,059,501 to Strickler disclosed a very sophisticated apparatus without any particular reason therefor. The fact that the slab gels are allowed to move longitudinally with respect to the apparatus prevents the carrying out of tests with many gels at the same time. At the most, two (2) slab gels could be used simultaneously while it would be of high interest to test up to twenty (20) gels simultaneously. In addition, this apparatus would possibly create problems of electrical contact because of the spring means 46 and the fact that the slabs rise along the spring means 46. The Strickler device is therefore not adapted to test a plurality of slab gels at the same time.

According to Kaplan U.S. 4,151,065, the apparatus described therein, which is of the well known commercial type, has two containers with two electrodes, the containers being maintained at a fixed distance with respect to one another. It can therefore be used only with one size of slab gels. The gel is connected to the buffer and consequently to the electrode by means of agarose. The latter should be used at high concentration in order that the wick be used repeatedly. It is well known the agarose is very expensive and that it deteriorates very rapidly. The use of such an apparatus is complicated by the fact that agarose bridges are involved. To overcome this problem to some extent the gel is immersed in the buffer. However, this creates a problem of electrical overcharge especially if the operation is fast. One must therefore use only one apparatus with each power supply unit.

With respect to the number of gels, since the process using the Kaplan's apparatus is restricted to a gel of a given concentration per apparatus, the number of samples is limited and the process cannot operate simultaneously with gels of agarose of different concentrations. Kaplan has tried to overcome this disadvantage by using gels of large dimensions and by providing two series of wells. However, under these conditions of operation, the small molecules will mask the larger molecules and prevent any interpretation.

U.S. 4,198,389 Wadsworth relates to the field of immunology. In addition he is strictly concerned with wells, and not with the formation of straight lines in a gel. Even if modified to accommodate a plurality of gels, there is no suggestion that this could be done. Furthermore, there is only one sample per gel and there is no teaching that a plurality of apparatuses could be modified to operate in series.

U.S. 4,416,761 Brown involves the use of a gel which does not enable a sufficient separation. There is one single well per sample. The apparatus is complicated and the gels have to be submerged with all the disadvantages mentioned above. In any case, this patent is less relevant than my own U.S. 4,391,688.

SUMMARY OF INVENTION

It is an object of the present invention to provide a system whereby a plurality, for example at least twelve regular agarose slab gels with multiple slots can be run in series using only one power supply outlet.

It is another object of the present invention to provide an electrophoresis system which can be used to rapidly determine the approx. size of human cytomegalovirus DNA fragments inserted at the Hind III site of plasmid pAT153.

In accordance with the present invention, there is provided an apparatus for the electrophoresis of multiple agarose slab gels, comprising:

a train of at least three elongated box-like containers which are set consecutively in substantially parallel fashion at a variable distance from one another, said containers to contain a running buffer;

said first and last containers each being provided with an electrode for connection to a single suitable power supply;

a plurality of horizontal plates, each to contain a slab gel, each plate being disposed in bridging fashion over adjacent spaced apart containers, said horizontal plates to cover gaps between all said containers;

first means capable of establishing capillary contact between one end of said slab gel and the running buffer which is present in a given container; and

second means capable of establishing capillary contact between the other end of said slab gel and the running buffer which is present in the next container.

In accordance with a preferred embodiment of the invention, each container is open at the top and has a rectangular cross-section defined by parallel vertical partitions, the vertical partitions being connected together by means of a bottom and two end portions, the horizontal plates sitting on facing vertical partitions of two adjacent containers.

In accordance with another preferred embodiment of the invention, the apparatus comprises a vertical plate in the first and last containers to define an electrode support, at least one electrical outlet being provided on the vertical plate for connection to the power supply and an electrically conductive wire running from the outlet, along the vertical plate into the running buffer to define the electrode.

In accordance with yet another preferred embodiment of the invention means are provided in the container to hold the vertical plate in vertical position. For example, these means may comprise a pair of blocks respectively fixed against the end portions of the first and last containers and a third block fixed against each outer partition of the first and last containers, the blocks being arranged inside the container so that the inner side of said electrode support rests against the pair of blocks and the outer side thereof rests against the third block, to maintain the electrode support in vertical position.

In accordance with yet another preferred embodiment of the invention, the containers, the electrode supports and the blocks are made of methyl acrylate plastic. The electrode support may also be made of polytetrafluoroethylene.

The slab gel preferably comprises agarose.

According to the invention there is also provided a method for the separation of components from a mixture of molecules of mixed molecular weights, wherein a solution of the molecules is added to wells formed in a horizontal slab gel and the gel is thereafter treated by electrophoresis to produce localized bands each being characteristic of a specific molecular weight, which comprises:

providing at least three spaced apart consecutive vessels, each containing a running buffer and the first and last containers being provided with an electrode;

arranging slab gel containing plates so that each horizontally bridges adjacent vessels, the plates to cover gaps between all the vessels;

establishing capillary contact between both ends of each slab gel and the running buffer which is present in adjacent corresponding vessels;

arranging a removable vertical plate in the first and last vessels, an electrically conductive wire being provided to run along the vertical plate into the running buffer to define an electrode;

connecting both the electrodes to a suitable single power supply; and

visualizing the localized bands produced in the gel slab.

The method is preferably applicable to the separation of multiple DNA samples, and the slab gel usually consists of agarose.

In accordance with another preferred embodiment of the invention there is provided a method for the separation of multiple DNA samples on different gel slabs which comprises:

providing at least three spaced apart consecutive elongated containers which can be set in parallel fashion at a variable distance from one another and each container having vertical parallel partitions the first and last containers housing a removable platinum electrode;

adding a running buffer to each of said containers, said running buffer in said first and last containers to contact said removable platinum electrode;

preparing a plurality of agarose gel slabs each having a row of wells formed therein, by pouring an agarose solution which has been equilibrated at 50°C over a plurality of horizontal glass plates over each of which a well-forming comb has been placed parallel to the glass plate at a distance of about 2 mm from the surface of said glass plate;

introducing DNA samples into wells of each agarose gel slab;

arranging agarose gel slab containing horizontal plates so that each horizontal plate horizontally bridges adjacent elongated containers;

covering each end of each of said agarose gel slabs with one edge portion of a sheet of an absorbing material, and allowing the other edge portion of each sheet of absorbing material to dip into the respective running buffer which is present in adjacent and said second containers;

connecting the removable platinum electrodes housed in each container to a suitable single power supply and allowing electrophoresis to take place, and visualizing the localized bands produced in said agarose gel slab.

The electrophoresis is usually carried out for about 4 hours at about 150 V per pair of gels at room temperature. Visualizing may be carried out by staining the gels with ethidium bromide in a buffer and directly illuminating the stained gels with short wave ultraviolet light.

BRIEF DESCRIPTION OF DRAWINGS

The invention will now be illustrated by means of the following drawings, in which:

FIGURE 1 is a perspective view of an electrophoresis apparatus according to the invention;

FIGURE 2 is a view in elevation, partly in cross-section of the apparatus illustrated in FIGURE 1;

FIGURE 3 is a cross-section view on a larger scale of the same apparatus;

FIGURE 4 shows the bands of 216 DNA samples loaded on twelve different agarose slab gels after electrophoresis;

FIGURE 5 shows the size distribution of plasmids carrying Hind III fragments; and

FIGURE 6 shows the size distribution of recombinant plasmids in a limited number of size groups.

DESCRIPTION OF PREFERRED EMBODIMENTS

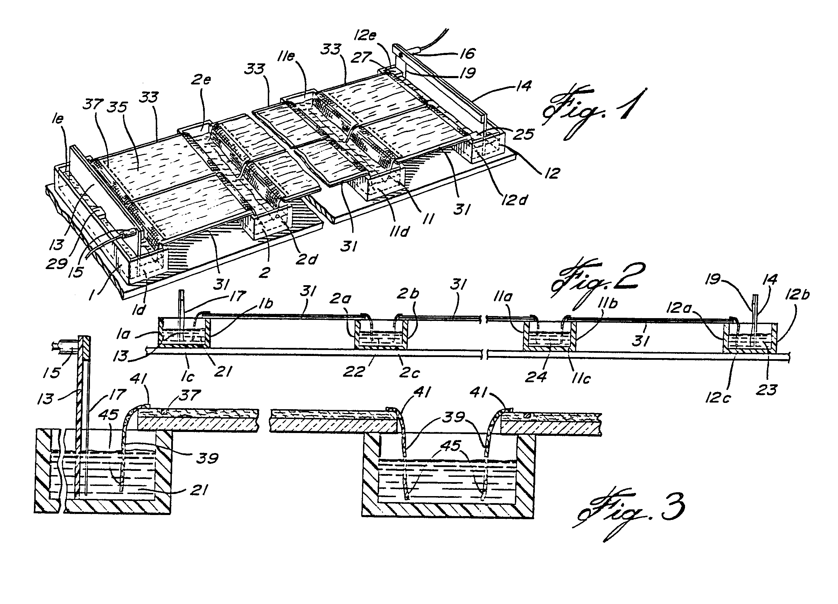

Referring to the drawings, more particularly FIGURES 1 to 3, there is illustrated an apparatus for the electrophoresis of multiple agarose slab gels which is especially constructed for allowing the separation of multiple DNA samples on a plurality of different slab gels, for example twelve, using the same apparatus and a single power supply.

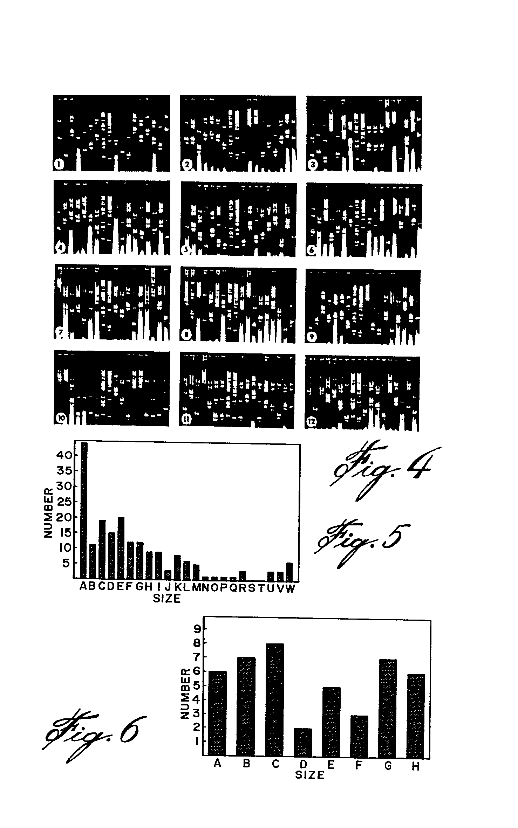

The apparatus shown is made mostly of Plexiglas®. It comprises a plurality, such as twelve identical elongated box-like containers 1, 2, ... 11 and 12. Each container is completely open at the top, as shown in the drawings and has rectangular cross-section as particularly shown in FIGURES 2 and 3. In each case, the container is made of vertical partitions 1a, 2a, ... 11a, 12a and 1b, 2b, ... 11b, 12b. As shown, the partitions 1a and 1b, 2a and 2b, ... 11a and 11b,

12a and 12b are respectively connected together by means of bottoms 1c, 2c, ... 11c, 12c, and end portions 1d and 1e, 2d and 2e, ... 11d and 11e, 12d and 12e. All the parts just described may all be made of Plexiglas®, although they may be manufactured from other suitable materials such as Teflon®.

To complete the assembly of the plurality of containers 1, 2, ... 11 and 12, removable vertical plates 13 and 14 are disposed vertically, lengthwise with respect to each container 1 and 12, all as shown in FIGURES 1 and 2. Each vertical plate 13 or 14 defines an electrode support and is provided with one electrical outlet 15 or 16, each outlet being adapted for connection to a suitable single power supply (not shown) of a type which is well known to those skilled in the art. Each vertical plate 13 or 14 has a platinum wire 17 or 19 which runs from the outlet 15 or 16, along the vertical plate 13 or 14 into the running buffer 21 or 23 which is present in containers 1 or 12. This arrangement of each vertical plate 13 or 14 will effectively define an electrode which is associated with a respective container 1 or 12. The vertical plates are in practice made of Plexiglas®, however Teflon® or any other suitable material may also be used. Plexiglas is a trademark for methyl acrylate plastic while Teflon is a trademark for polytetrafluoroethylene. The other containers 2 ... 11 also contain the same type of running buffer 22 ... 24.

In order to make sure that the vertical plates 13 and 14 remain in vertical position, in each container there are provided a pair of blocks 25 and 27 which are fixed respectively against the inner vertical partition 1b and 12a. This is illustrated in FIGURE 1 of the drawings. Each container 1 and 12 is also provided with a third block 29 which is fixed against a respective outer vertical partition 1a or 12b. As illustrated in the drawings, it will be seen that the blocks 25, 27 and 29 are arranged inside a respective container 1, 12 so that the inner side of a vertical plate defining an electrode support 13 or 14 rests against the pair of blocks 25, 27. On the other hand, the outer side of an electrode support 13 or 14 rests against the third block 29. This arrangement enables each electrode support 13 and 14 to remain in vertical position.

As shown, in the drawings, all the containers 1, 2, ... 11 and 12 are set substantially parallel to one another and are disposed in such a manner on a surface that the distance between two containers can be adjusted to vary according to needs.

The device illustrated comprises a pair of agarose gel slabs containing horizontal plates 31 and 33 to cover all the gaps between the containers 1, 2, ... 11, 12. As shown, the horizontal plates are arranged in bridging fashion over two consecutive elongated box-like containers 1, 2, ... 11, 12. In arranging the plates 31, 33 over the containers 1, 2, ... 11, 12 care should be taken to make sure that their edges are parallel respectively with the inner partitions 1b, 2a; 2b, ... 11a; 11b, 12a of the containers 3 and 5. In the embodiment which is illustrated, as it will be seen later, the outer edges of the plates 31, 33 extend slightly past the partitions 1b, 2a; 2b, ... 11a; 11b, 12a for a more practical operation of the device according to the invention. Although only two plates have been shown to bridge consecutive containers, it is obvious that more plates can be disposed over the containers depending on the sizes of the plates and of the containers and the need to carry out a large number of tests at the same time.

As mentioned previously, the gel 35 which is formed on the plates 31, 33 has a row of wells 37 which have been prepared by placing a well-forming comb (not shown) over each plate 31, 33 at a distance of about 2 mm from the surface thereof, near the edges of the plates 31, 33 closest to the container 12.

Once the plates 31, 33 have been placed over the containers 1, 2, ... 11, 12 in the manner shown in FIGURE 1 of the drawings a sheet of a two-ply Nu-Gauze® wick 39 is arranged to have one edge portion 41 covering the gel 35 all in the manner illustrated in the drawings. The other edge portion 45 is allowed to hang down as shown in the drawings so as to dip into the running buffer 23 which has been added to all the containers before initiating the test. Of course there are used two sheets 39 for each gel.

The operation of the device is as indicated previously with reference to the description of the method.

EXAMPLE

The invention is also illustrated by means of the following example.

Preparation of virus DNA

Human cytomegalovirus (HCMV) strain AD169 (obtained from Dr F. Rapp, Pennsylvania State University, Hershey) was propagated in human IAFP-1 lung fibroblasts, and virus harvested from the extracellular fluids by polyethylene glycol precipitation. Virus particles were purified by velocity sedimentation through 10-50% sucrose gradients. DNA was isolated from purified virions by lysis with 1% SDS and 150 µg/ml proteinase K (Sigma) followed by isopycnic centrifugation in CsCl-ethidium bromide.

Construction, transfection and isolation of recombinant plasmids

The plasmid pAT153 which contains ampicillin and tetracycline resistance markers was extracted from Escherichia coli strain HB101 and purified by equilibrium CsCl-ethidium bromide centrifugation as described by Spector et al. (J. Virol. 1982, 42, 558-552). Plasmid and HCMV DNAs were cleaved separately with 5-10 units of the restriction endonuclease Hind III (Boehringer Mannheim Canada) in 20 mM Tris HCl, pH 7.4, 7 mM $MgCl_2$, and 60 mM NaCl at 37°C for 2 h followed by inactivation of the enzyme at 70°C for 10 min. Viral Hind III restriction fragments were mixed with the linearized plasmid in a 4:1 molar ratio of free ends. The DNA concentration was adjusted to 20 µg/ml and the mixture then incubated with 1-2 units of T4 DNA ligase (BMC) in 20 mM Tris HCl, pH 7.6, 10 mM $MgCl_2$ 10 mM DTT, 0.6 mM ATP at 4°C for 16 h. Transfection of the ligated plasmids into E. coli was done by the $CaCl_2$ method of Hutchison and Halvorson disclosed in Gene 1980, 8, 267-278. Colonies of HB101 containing recombinant HCMV plasmids were picked directly from selection agar plates containing 50 µg/ml ampicillin and 4 µg/ml tetracycline into 1.5 ml of nutrient broth with ampicillin only and grown overnight at 37°C. Bacterial pellets were prepared by centrifugation of the culture at 12,800 g for 1 min in an Eppendorf microfuge. Each pellet was suspended in 20 µl of a solution containing 25% sucrose, 50 mM Tris HCl, pH 7.5, 100 mM EDTA, 0.1% Triton X-100, and 1 mg/ml lysozyme. After 10 min at room temperature, the mixture was placed in boiling water for 40 sec, then centrifuged at room temperature for 15 min. The supernatant was removed without touching the gelatinous material at the bottom of the tube and kept at -70°C for later plasmid analysis by agarose gel electrophoresis.

Identification of recombinant plasmids by agarose gel electrophoresis

A 10-$\mu$l aliquot from each of the cleared lysates was loaded onto a 1% agarose slab gel (14 x 18 x 0.5 cm) prepared in 100 ml of TBE buffer (0.1 M Tris, pH 8.3, 0.1 M boric acid, 2 mM EDTA). Agarose gels were carefully aligned two by two on the inner side of facing buffer-chambers and covered at both ends with two ply Nu-Gauze®(Johnson and Johnson, Inc.) wicks. Electrophoresis was carried out at 150 V for every pair of gels (900 V total) for 4 h at room temperature. After the run, the twelve gels used were stained with 1 $\mu$g/ml ethidium bromide and photographed under ultraviolet light illumination. Supercoiled plasmids of known molecular weight were included in each run as markers.

3 RESULTS AND DISCUSSION

A total of 216 DNA samples were loaded on twelve different agarose slab gels resting on the inner side of seven buffer-vessels and electrophoresed together at 900 V for 4 h using a single power supply. Sharp DNA bands were obtained in each case and the distance travelled by the recombinant plasmids of known size appeared as relatively constant from one gel to another (FIGURE 2). A close relationship between migration rate and size was also observed for each of the DNA markers. With the electrophoresis system according to the present invention, hundreds of DNA samples may thus be conveniently analyzed in one day using a minimum of expensive equipment. Results also confirm the versatility of the basic electrophoresis unit according to the invention.

The DNA band found in the lowest part of the gels in FIGURE 2 (lane 10) contains pAT153 without any insert. All the other DNA molecules in the gels migrate less rapidly than the intact cloning vector and thus contain at least one *Hind* III fragment of HCMV DNA. Such results indicate that both the insertion of foreign DNA at the *Hind* III site of pAT153 and the selection of recombinant *E. coli* clones were done in optimal conditions.

The approx. size of each of the 192 recombinant plasmids was determined using fully-characterized plasmids as DNA markers. As shown in FIGURE 3, plasmids carrying *Hind* III fragments appeared as well-distributed in size between 4 and 10 Kb. Larger plasmids (up to 42 Kb) were less frequently observed than smaller ones. This may be related to the fact that transformation efficiency declines linearly with increasing plasmid size. Restriction endonuclease cleavage site analysis later showed that more than 70% of the HCMV genome was represented in the whole series of recombinants. Such results confirm the usefulness of the electrophoresis system according to the invention, in large cloning work.

Agarose gel electrophoresis provides a simple, convenient and inexpensive way to analyse DNA molecules. Physical mapping of DNA genomes closely rely on such gels. It remains, however, that small DNA fragments (below 0.3 Kb) are sometimes difficult to detect in gel systems commonly used. When such fragments are missed during the construction of a physical map, it is then impossible to guarantee the exact position of all the restriction endonuclease sites on the DNA molecule. In this study, forty-two recombinant plasmids only slightly larger than pAT153 were detected by screening the DNA molecules in their superhelical form (FIGURE 2). Frequently observed and always distributed among a limited number of size groups (FIGURE 4), these plasmids most probably carry small Hind III fragments of the HCMV genome. The electrophoresis system according to the present invention is currently used not only to screen recombinant clones, but also to establish the restriction maps of different viral genomes or follow the activity of DNA-modifying enzymes in column effluent fractions during purification. This unique system provides equivalent migration rates in more than twenty large-scale gels to compare relative DNA band mobilities in numerous samples, and the results are definitively equivalent to those obtained by other systems which are more expensive to fabricate or purchase. Because of its high sample capacity and simplicity, less costly equipment is required per experiment. Versatility is another advantage of the system: (i) large or small slabs can be run in series; and (ii) simultaneous migration of DNA molecules in low- and high-concentration gels is also possible. No particular problem has been encountered while running gels in series even if the technique requires the use of high buffer-holding capacity wicks to provide uniform electrical paths between the electrodes and the gel slabs. The electrophoresis system thus according to the invention appears as a most effective and useful tool for DNA separation in agarose gels.

I CLAIM:

1. An apparatus for the electrophoresis of multiple agarose slab gels, comprising:

a train of at least three elongated box-like containers which are set consecutively in substantially parallel fashion at a variable distance from one another, said containers to contain a running buffer;

said first and last containers each being provided with an electrode for connection to a single suitable power supply;

a plurality of horizontal plates, each to contain a slab gel, each plate being disposed in bridging fashion over adjacent spaced apart containers, said horizontal plates to cover gaps between all said containers;

first means capable of establishing capillary contact between one end of said slab gel and the running buffer which is present in a given container; and

second means capable of establishing capillary contact between the other end of said slab gel and the running buffer which is present in the next container.

2. An apparatus according to claim 1, wherein each container is open at the top and has a rectangular cross-section defined by parallel vertical partitions, said partitions being connected together by means of a bottom and two end portions, said horizontal plates sitting on facing vertical partitions of two adjacent containers.

3. An apparatus according to claim 2, which comprises a vertical plate, in said first and last containers to define an electrode support, at least one electrical outlet being provided on said vertical plate for connection to said power supply and an electrically conductive wire running from said outlet, along said vertical plate into said running buffer to define said electrode.

4. An apparatus according to claim 3, which comprises means provided in said container to hold said vertical plate in vertical position.

5. An apparatus according to claim 4, wherein said means comprises a pair of blocks respectively fixed against the end portions of said first and last containers and a third block fixed against each outer partition of said first and last containers, said blocks being arranged inside said container so that the inner side of said electrode support rests against said pair of blocks and the outer side thereof rests against said third block, to maintain said electrode support in vertical position.

6. An apparatus according to claim 5, wherein said containers, said electrode supports and said blocks are made of methyl acrylate plastic.

7. An apparatus according to claim 5, wherein said electrode support is made of polytetrafluoroethylene.

8. An apparatus according to claim 1, wherein said means capable of establishing capillary contact comprises sheets of paper wicks.

9. An apparatus according to claim 1, wherein said means capable of establishing capillary contact comprises sheets of synthetic material capable of absorbing liquid.

10. An apparatus according to claim 1, wherein said slab gel comprises agarose.

11. An apparatus for the electrophoresis of multiple agarose slab gels, which comprises:

at least three elongated box-like containers which are capable of being set consecutively in substantially parallel fashion at a variable distance from one another, said containers to contain a running buffer;

each container being open at the top and having a rectangular cross-section defined by vertical parallel partitions, said partitions being connected together by means of a bottom and two end portions;

a pair of removable vertical plates each defining an electrode support, vertical plates being disposed lengthwise in each of the first and last containers;

at least one electrical outlet being provided on each said vertical plate for connection to a suitable single power supply;

a platinum wire running from said outlet, along said vertical plate into said buffer to define an electrode associated with a respective container;

a pair of blocks respectively fixed against the end portions of each of said elongated containers and a third block fixed against each outer vertical partition of said first and last containers; said blocks being arranged inside said first and last containers so that the inner side of said electrode support rests against said pair of blocks and the outer side thereof rests against said third blocks, thereby enabling said electrode support to remain in vertical position;

at least one agarose gel slab containing horizontal plates arranged in bridging fashion over consecutive elongated box-like containers, each horizontal plate having both ends thereof parallel respectively along facing partitions of adjacent box-like containers;

a sheet of absorbing material having an edge portion covering an end of each of said agarose gel slabs and the other edge portion of each sheet of absorbing material dipping into the respective running buffer which is present in said elongated box-like containers.

12. In a method for the separation of components from a mixture of molecules of mixed molecular weights, wherein a solution of said molecules is added to wells formed in a horizontal slab gel and said gel is thereafter treated by electrophoresis to produce localized bands each being characteristic of a specific molecular weight, the improvement which comprises:

providing at least three spaced apart consecutive vessels, each containing a running buffer, and the first and last containers being provided with an electrode;

arranging slab gel containing plates so that each horizontally bridges adjacent vessels, said plates to cover gaps between all said vessels;

establishing capillary contact first between both ends of each said slab gel and the running buffer which is present in adjacent corresponding vessels;

arranging a removable vertical plate in the first and last vessels, an electrically conductive wire being provided to run along said vertical plate into said running buffer to define an electrode;

23 0173081

connecting both said electrodes to a suitable single power supply; and

visualizing the localized bands produced in said gel slab.

13. A method according to claim 12 for the separation of multiple DNA samples, wherein said slab gel consists of agarose.

14. A method for the separation of multiple DNA samples on different gel slabs which comprises:

providing at least three spaced apart consecutive elongated containers which can be set in parallel fashion at a variable distance from one another and each container having vertical parallel partitions, the first and last containers housing a removable platinum electrode;

adding a running buffer to each of said containers, said running buffer in said first and last containers to contact said removable platinum electrode;

preparing a plurality of agarose gel slabs each having a row of wells formed therein, by pouring an agarose solution which has been equilibrated at 50°C over a plurality of horizontal glass plates over each of which a well-forming comb has been placed parallel to the glass plate at a distance of about 2 mm from the surface of said glass plate;

introducing DNA samples into wells of each agarose gel slab;

arranging agarose gel slab containing horizontal plates so that each horizontal plate horizontally bridges adjacent elongated containers;

covering each end of each of said agarose gel slabs with one edge portion of a sheet of an absorbing material, and allowing the other edge portion of each sheet of absorbing material to dip into the respective running buffer which is present in adjacent containers;

connecting the removable platinum electrodes housed in each container to a suitable single power supply and allowing electrophoresis to take place, and

visualizing the localized bands produced in said agarose gel slab.

15. A method according to claims 13 or 14, wherein the electrophoresis is carried out for about 4 hours at about 150 V and per pair of gels at room temperature.

16. A method according to claims 13 or 14, wherein said visualizing is carried out by staining the gels with ethidium bromide in a buffer and directly illuminating the stained gels with short wave ultraviolet light.

*Fig. 1*

*Fig. 2*

*Fig. 3*

Fig. 4

Fig. 5

Fig. 6

0173081

European Patent Office

**EUROPEAN SEARCH REPORT**

Application number

EP 85 10 9369

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 391 688 (HAMELIN)<br><br>* Whole document *<br><br>--- | 1-8,10 -14,16 | G 01 N 27/26 |
| Y | US-A-3 930 973 (NERENBERG)<br><br>* Whole document *<br><br>--- | 1-8,10 -14,16 | |
| A | US-A-3 930 983 (SIEBER)<br><br>* Column 2, line 38 - column 3, line 50 *<br><br>----- | 1,11, 12 | |
| | | | TECHNICAL FIELDS SEARCHED (Int. Cl.4)<br><br>G 01 N 27/00 |

The present search report has been drawn up for all claims

| Place of search | Date of completion of the search | Examiner |
|---|---|---|
| THE HAGUE | 13-11-1985 | BINDON C.A. |